# EUROPÄISCHE PATENTSCHRIFT

(11) **EP 1 879 817 B1**
(45) Veröffentlichungstag und Bekanntmachung des Hinweises auf die Patenterteilung: **19.05.2010**
(21) Anmeldenummer: 07703341.3
(22) Anmeldetag: 08.02.2007
(51) Int. Cl.: B65G 47/252, B65G 47/08, B65G 47/82

(54) **VORRICHTUNG ZUM FÖRDERN UND PAKETIEREN VON HOLZQUADERN**
DEVICE FOR TRANSPORTING AND PACKETING WOODEN BLOCKS
DISPOSITIF DE TRANSPORT ET DE PAQUETAGE DE PIÈCES DE BOIS PARALLÉLÉPIPÉDIQUES

(30) Priorität: 08.02.2006 DE 202006002082 U; 15.07.2006 DE 102006032917; 15.07.2006 DE 102006032919
(43) Veröffentlichungstag der Anmeldung: 23.01.2008
(73) Patentinhaber: Sicko, Carlo, 75059 Zaisenhausen (DE); Sicko, Jochen, 75059 Zaisenhausen (DE)
(72) Erfinder: Sicko, Carlo, 75059 Zaisenhausen (DE); Sicko, Jochen, 75059 Zaisenhausen (DE)
(74) Vertreter: Twelmeier, Ulrich
(86) Internationale Anmeldenummer: PCT/EP2007/001061
(87) Internationale Veröffentlichungsnummer: WO 2007/090636

(56) Entgegenhaltungen:
- EP-A1- 1 602 603
- DE-A1- 2 942 290

## Beschreibung

Die Erfindung betrifft eine Vorrichtung zum Fördern und Paketieren von Holzquadern mit dem im Oberbegriff des Anspruchs 1 angegebenen Merkmalen.

Aus der EP 1602603 A1 ist eine Vorrichtung zum Gruppieren von Gegenständen zum anschließenden Verpacken bekannt, die einen Zuförderer aufweist, auf dem Quader einzeln auf ihrer Breitseite liegend quer zu ihrer Längserstreckung gefördert werden können. Die bekannte Vorrichtung hat zudem eine Gruppiereinheit, auf welcher Quader hochkant auf ihren Schmalseiten liegend zu einem Paket zusammengestellt werden können, wobei die Gruppiereinheit tiefer angeordnet ist als der Zuförderer und in Förderrichtung des Zuförderers verschiebbar ist. Eine Übergabeeinrichtung der Vorrichtung kann auf ihrer Breitseite liegend zugeförderte Holzquader aufrichten und hochkant liegend an die Gruppiereinheit übergeben, wo sie zu einem Paket zusammengebracht werden können.

Der Einsatzbereich einer erfindungsgemäßen Vorrichtung liegt im Bereich der Optimierung der Qualität von Holzquadern, z. B. von Brettern und von Kanthölzern. Aus diesen werden schadhafte Stellen wie z. B. Äste oder Risse mit Kappsägen in Optimierungskappanlagen ausgekappt. Die danach verbleibenden, qualitativ guten, aber durch das Kappen verkürzten Holzstücke werden in einer Keilzinkenanlage wieder zu einer langen Stange, einem langen Brett, einem langen Kantholz oder dergleichen zusammengefügt. Dazu werden sie an ihren Enden mit einem Zinkenprofil versehen und mit Leim zusammengefügt. Um eine rationelle Arbeitsweise zu erreichen, werden die Holzquader der Keilzinkenanlage nicht einzeln, sondern als Paket zugeführt. Das Paket besteht aus mehreren nebeneinander liegenden Holzquadern von gleichem Querschnitt, deren eine Endflächen in einer gemeinsamen Flucht ausgerichtet und gemeinsam, in einem einzigen Arbeitsgang, mit dem Zinkenprofil versehen werden.

Die vorliegende Vorrichtung zum Fördern und Paketieren dient dazu, die von der Kappsäge kommenden, unterschiedlich langen, guten Holzstücke zu einem Paket zusammenzufügen und an einen Abförderer zu übergeben, mit dessen Hilfe sie einer Paketkeilzinkenanlage zugeführt werden können.

Die quaderförmigen Holzstücke haben typisch Längen von ca. 150 mm bis ca. 3.000 mm und Querschnitte von ca. 15 mm x 40 mm bis ca. 150 mm x 300 mm. Zu einem Paket zusammengefügt werden quaderförmige Holzstücke, die im Querschnitt übereinstimmen, deren Länge aber stark variieren kann. Die Vorrichtung zum Fördern und Paketieren muss in der Lage sein, das Paketieren für Holzquader mit unterschiedlichen Querschnitten, wie oben angegeben, durchzuführen.

Die Holzquader werden, von der Kappanlage kommend, auf einem Zuförderer herangefördert, auf welchem sie auf ihrer Breitseite liegend quer zu ihrer Längserstreckung gefördert werden. Der Zuförderer wird deshalb auch als Querförderer bezeichnet.

Der Paketkeilzinkenanlage werden die Holzquader jedoch hochkant, also auf ihrer Schmalseite stehend, zu einem Paket zusammengefügt in der Längsrichtung der Holzquader zugeführt. Die Holzquader sind deshalb so an einen quer zum Zuförderer fördernden Abförderer zu übergeben, dass sie auf dem Abförderer hochkant stehen und stets mehrere von ihnen längs nebeneinander zu einem Paket zusammengestellt werden.

Die von einer Vorrichtung zum Fördern und Paketieren von Holzquadern verlangte Arbeitsleistung richtet sich nach der Arbeitsleistung der Kappanlage bzw. nach der Arbeitsleistung der Paketkeilzinkenanlage, mit welchen die Vorrichtung zum Fördern und Paketieren von Holzquadern zusammenarbeiten muss. Beim gegenwärtigen Stand der Technik verlangt man von einer Vorrichtung zum Fördern und Paketieren von Holzquadern eine Leistung von bis zu 100 Holzquadern pro Minute. Bekannte Vorrichtungen sind dazu nicht in der Lage, weshalb das Paketieren zumeist durch Handarbeit erledigt wird. Typischerweise werden drei Personen benötigt, um die mit einem Zuförderer herantransportierten Holzquader vom Zuförderer abzunehmen, hochkant längs nebeneinander auf einen Abförderer zu stellen, sie zu einem Paket zusammenzuschieben und vorzugsweise auch noch so auszurichten, dass sie mit ihrem einen Ende in einer gemeinsamen Flucht liegen.

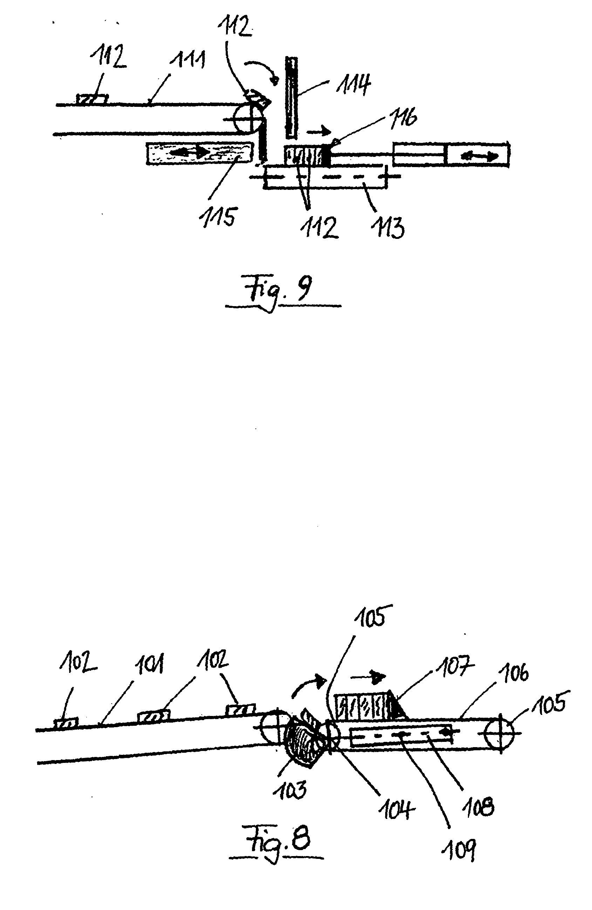

Durch Benutzung bekannt geworden ist eine Vorrichtung, deren Funktionsprinzip schematisch in Figur 8 dargestellt ist.

Figur 8 zeigt einen als Waagerechtförderer ausgebildeten Zuförderer 101, auf dessen Obertrum Holzquader 102 quer gefördert werden. Am Ende des Zuförderers ist ein Schwenkarm 103 vorgesehen, welcher um eine waagerechte Achse 104 schwenkbar ist, deren Lage zusammenfällt mit der Drehachse von Umlenkrädern 105 eines zweiten Waagerechtförderers 106, welcher als Kettenförderer ausgebildet ist, d. h., er weist mehrere mit Abstand nebeneinander angeordnete endlose Ketten auf, die über Umlenkräder gespannt sind, von denen jeweils eines angetrieben ist.

Durch das Hochschwenken des Schwenkarms 103 gelangt ein jeder Holzquader 102 hochkant auf das Obertrum des Waagerechtförderers 106. Ein Gegenhalter 107 sichert die Holzquader 102, die auf den Waagerechtförderer 106 hochgeschwenkt wurden, gegen ein Umfallen. Der Gegenhalter 107 ist an den Ketten des Waagerechtförderers 106 angebracht und wird mit diesen mitbewegt, um auf dem Waagerechtförderer 106 Platz zu schaffen für den jeweils nächsten Holzquader 102. Hat das Paket aus Holzquadern 10 die gewünschte Größe erreicht, wird es abgefördert. Da die Pakete in der Längsrichtung der Holzquader abgefördert werden, ist in den Waagerechtförderer 106 eine Rollenbahn 108 integriert, deren Drehachsen 109 in Förderrichtung des Waagerechtförderers 106 verlaufen. Die Rollenbahn 108 liegt beim Paketieren unter dem Obertrum der Ketten des Waagerechtförderers 106. Zum Abfördern des Pakets wird die Rollenbahn 108 soweit angehoben oder der Waagerechtförderer soweit abgesenkt, dass die Rollen über das Obertrum des Waagerechtförderers 106 vorstehen, so dass die Rollenbahn 108 das Paket aus den Holzquadern 102 von den Ketten des Waagerechtförderers 106 abhebt und durch Antreiben der Rollen quer zur Förderrichtung des Waagerechtförderers 106 zur Keilzinkenanlage transportiert.

Nachteilig bei der bekannten Vorrichtung ist, dass mit dem hin und her gehenden Schwenkarm 104 nicht mehr als 40 Holzquader pro Minute umgesetzt werden können. Ein weiterer Nachteil besteht darin, dass Rollenbahnen für das Fördern von kurzen Holzquadern ungünstig sind, weil diese in die Lücken zwischen je zwei benachbarten Rollen kippen können, mal mit ihrem vorderen Ende nach vorne, mal mit ihrem hinteren Ende nach hinten.

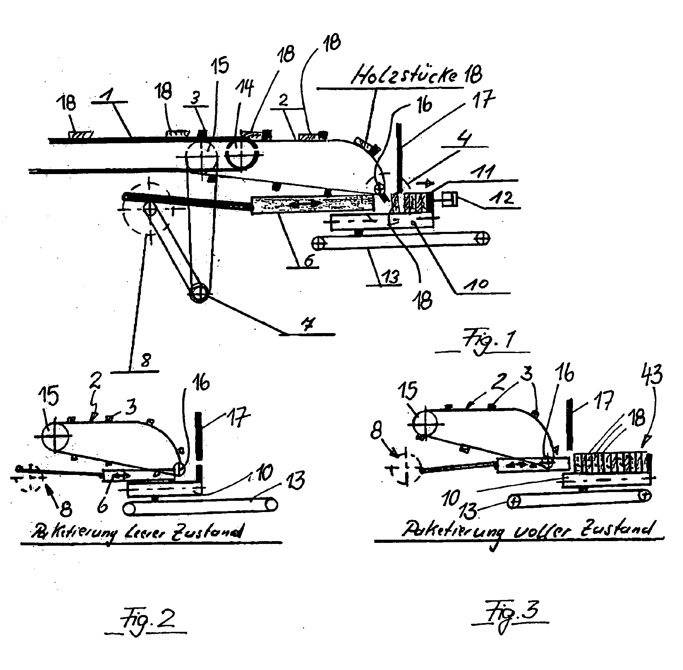

Das Funktionsprinzip einer anderen bekannten Vorrichtung zum Fördern und Paketieren von Holzquadern ist schematisch in Figur 9 dargestellt. Ein als Waagerechtförderer ausgebildeter Zuförderer 111 fördert die von einer Kappanlage kommenden, unterschiedlich langen Holzquader 112 auf ihrer Breitseite liegend quer heran. Am Ende des Waagerechtförderers 111 ist auf tieferem Niveau ein Abförderer 113 vorgesehen, der ebenfalls ein Waagerechtförderer ist, aber eine quer zur Förderrichtung des Zuförderers 111 verlaufende Förderrichtung hat. Die quaderförmigen Holzstücke 112 fallen am Ende des Waagerechtförderers 111 über eine Fallstufe auf den Abförderer 113. Zu diesem Zweck ist durch das Ende des Zuförderers 111 und eine davon beabstandete senkrechte Führungseinrichtung 114 ein Fallschacht begrenzt. Unter dem Zuförderer 111 ist ein Querschieber 115 vorgesehen, welcher aus einer in Figur 2 dargestellten zurückgezogenen Stellung in eine über dem Abförderer 113 liegende Stellung vorschiebbar ist, in welcher er mit der Führungseinrichtung 114 fluchtet, welche von dem Obertrum des Abförderers 113 so viel Abstand hat, dass die Holzquader 112 hochkant stehend unter der Führungseinrichtung 114 hindurchgeschoben werden können.

Die bekannte Maschine ist so getaktet, dass die Holzquader vom Zuförderer 111 herabfallen, wenn sich der Querschieber 115 in seiner vorgeschobenen Stellung befindet. Der Querschieber 115 wird dann zurückgezogen, so dass der auf ihn herabgefallene Holzquader 112 weiterfällt bis auf den Abförderer 113. Beim nächsten Vorschub des Querschiebers 115 wird der Holzquader 112 unter der Führungseinrichtung 114 hindurchgeschoben gegen einen pneumatisch zurückweichenden Gegenhalter 116, welcher das Umfallen der Holzquader 112 verhindern und die Paketbildung ermöglichen soll. Angesichts von Querschnittsabmessungen der Holzquader bis zu 150 mm x 300 mm beträgt der Fallweg der Holzquader mindestens 300 mm. Das hat zur Folge, dass insbesondere kürzere und im Querschnitt kleinere Holzquader dazu neigen, unkontrolliert zu springen und zur Seite auszubrechen. Das hat Störungen im Betrieb der bekannten Vorrichtung zur Folge, so dass trotz einer möglichen schnellen Bewegung des Querschiebers 115 die Arbeitsleistung der Maschine wesentlich kleiner ist als theoretisch möglich wäre, wenn die Holzquader nicht hüpfen und auszubrechen versuchen würden. Ein weiterer Nachteil der bekannten Vorrichtung liegt darin, dass der Querschieber relativ große Kräfte aufbringen muss, um das bereits in Bildung befindliche Paket unter Überwindung der pneumatischen Gegenkraft des Gegenhalters quer zu verschieben. Die Folge davon ist, dass die Pakete dazu neigen, mehr oder weniger in sich zusammenzuklappen, wenn sich zwischen zwei längeren Holzquadern ein oder mehrere kurze Holzquader befinden. Außerdem ist nachteilig, dass immer das gesamte bereits gebildete Paket verschoben werden muss, so dass die erforderliche Schubkraft von mal zu mal größer wird.

Der vorliegenden Erfindung liegt die Aufgabe zugrunde, eine Vorrichtung der eingangs genannten Art dahingehend zu verbessern, dass sie sowohl schnell als auch zuverlässig paketiert.

Diese Aufgabe wird gelöst durch eine Vorrichtung mit den im Anspruch 1 angegebenen Merkmalen. Vorteilhafte Weiterbildungen der Erfindung sind Gegenstand der Unteransprüche.

Die Vorrichtung gemäß Anspruch 1 hat einen Zuförderer, auf welchem die Holzquader auf ihrer Breitseite liegend quer zu ihrer Längserstreckung gefördert werden und einen Abförderer, der tiefer angeordnet ist als der Zuförderer und auf welchem die Holzquader hochkant auf ihrer Schmalseite liegend und paketweise zusammengestellt in ihrer Längsrichtung quer zur Förderrichtung des Zuförderers abgefördert werden. Für das Übergeben der Holzquader vom Zuförderer auf den Abförderer ist eine Übergabeeinrichtung vorgesehen, welche die auf ihrer Breitseite liegend zugeförderten Holzquader aufrichtet und hochkant liegend an den Abförderer übergibt.

Erfindungsgemäß hat die Übergabeeinrichtung eine den Zuförderer fortsetzende, abwärts gekrümmte Bewegungsbahn und synchron mit dem Zuförderer antreibbare Auflager, welche sich entlang der gekrümmten Bewegungsbahn abwärts bewegen und auf welchen die Holzquader während der Abwärtsbewegung mit einer ihrer Schmalseiten liegen. Außerdem weist die Übergabeeinrichtung eine unter einem Winkel zu den Auflagern angeordnete Stützeinrichtung auf, an welcher die Holzquader anliegen und abgestützt werden, wenn sie sich auf den Auflagern an der gekrümmten Bewegungsbahn entlang abwärtsbewegen zum Abförderer.

Das hat wesentliche Vorteile:
- Die Holzquader gelangen nicht im freien Fall auf den Abförderer, sondern kontrolliert mit einer Geschwindigkeit, die von den Auflagern vorgegeben ist.
- Während sich die Holzquader mit kontrollierter Geschwindigkeit an der gekrümmten Bewegungsbahn entlangbewegen, werden sie allmählich aufgerichtet. Auch dieser Vorgang erfolgt nicht abrupt, sondern kontrolliert.
- Sowohl der Aufrichtvorgang als auch der Absenkvorgang erfolgen fließend und schonend.
- Ein Hüpfen, Springen, seitliches Ausbrechen, Hochstellen und Umfallen der Holzquader sind ausgeschlossen. Unerwünschte Betriebsunterbrechungen durch solche Fehler sind deshalb ebenfalls ausgeschlossen.
- Die Vorrichtung arbeitet für alle möglichen Formate der Holzquader gleich gut, für kurze wie für lange Quader, für im Querschnitt rechteckige, wie im Querschnitt quadratische Quader, für Bretter ebenso wie für Kanthölzer.
- Die kontrollierte, kombinierte Aufricht- und Abwärtsbewegung kann synchron mit der Bewegung des Zuförderers problemlos in der gewünschten Geschwindigkeit erfolgen, so dass das bisher überwiegend manuell vorgenommene Aufrichten und Paketieren der Holzquader nunmehr zuverlässig vollautomatisch erfolgen kann. Dadurch wird zugleich die Arbeitssicherheit erhöht.

Der Zuförderer und der Abförderer sind zweckmäßigerweise Waagerechtförderer. Der Abförderer hat vorzugsweise ein endloses Förderglied in Gestalt eines Förderbandes, welches sich besonders gut dafür eignet, um darauf mehrere Holzquader zu einem Paket zusammenzuführen und dieses dann in Längsrichtung der Holzquader abzufördern. Der Zuförderer könnte ebenfalls mit einem endlosen Förderband arbeiten, hat aber vorzugsweise mehrere mit Abstand parallel zueinander laufende endlose Förderglieder, bei denen es sich um Bänder handeln kann. Vorzugsweise handelt es sich jedoch um Förderketten oder Riemen, insbesondere Zahnriemen, mit denen ein schlupffreier Transport gewährleistet ist. Das ist wichtig, damit die Holzquader ihre Ausrichtung rechtwinklig zur Förderrichtung auf dem Zuförderer beibehalten.

Die Auflager, auf denen die Holzquader kontrolliert abwärts bewegt werden, können an den Fördergliedern des Zuförderers vorgesehen sein. In diesem Fall würde man die Förderglieder des Zuförderers an dessen Ende, welches dem Abförderer benachbart ist, über einen so großen Radius umlenken, dass bei der vorgesehenen Fördergeschwindigkeit das Aufrichten der Holzquader nicht zu rasch erfolgt, was die Lage der Holzquader destabilisieren könnte. Außerdem ist es empfehlenswert, die Holzquader zur Anlage an den Auflagern zu bringen, bevor diese sich am Ende des Zuförderers abwärts bewegen.

Vorzugsweise ist die Vorrichtung so ausgebildet, dass die Auflager zwar synchron mit dem Zuförderer, jedoch getrennt von den Fördergliedern des Zuförderers bewegt werden. Zu diesem Zweck weist die Übergabeeinrichtung vorzugsweise einen gesonderten Übergabeförderer auf, welcher mehrere mit Abstand parallel nebeneinander verlaufende Förderglieder aufweist, die sich mit dem Zuförderer überlappen, indem Förderglieder des Übergabeförderers in Zwischenräume zwischen den Fördergliedern des Zuförderers ragen und umgekehrt, wobei es darauf ankommt, dass dieses jeweils für das Obertrum der Förderglieder zutrifft.

Der Zuförderer ist vorzugsweise schneller antreibbar als der Übergabeförderer mit seinen Auflagern. Das hat den Vorteil, dass die Holzquader im Überlappungsbereich des Zuförderers und des Übergabeförderers zwangsweise vom schnelleren Zuförderer bis an die langsameren Auflager gefördert werden. Dadurch ist sichergestellt, dass die Holzquader bereits an ihren Auflagern liegen, wenn diese beginnen, sich abwärts zu bewegen.

Die unterschiedlichen Geschwindigkeiten des Zuförderers und des Übergabeförderer verlangsamen die Vorrichtung insgesamt nicht, sondern haben lediglich zur Folge, dass die Holzquader auf dem Zuförderer in größeren Abständen liegen als auf dem Übergabeförderer, soweit sie auf dem Zuförderer nicht an einem Anschlag gestaut und dann vereinzelt und an den Übergabeförderer übergeben werden um sicherzustellen, dass an dessen Auflagern stets nur ein einziger Holzquader liegt.

Der Übergabeförderer hat als endlose Förderglieder vorzugsweise Ketten oder Zahnriemen, die beide einen schlupffreien Transport ermöglichen. Die Auflager können Nocken sein, die an Kettengliedern befestigt oder den Zahnriemen angeformt, aufvulkanisiert oder aufgenietet sind. Insbesondere bei Verwendung von Ketten als Förderglieder ergibt sich die günstige Möglichkeit, an den Fördergliedern Krallen als Widerlager anzubringen, welche dadurch, dass sie sich ein wenig in die Holzquader eingraben, diesen einen besonders guten Halt geben.

Zwischen dem Zuförderer und dem Abförderer ist vorzugsweise ein parallel zum Obertrum des Abförderers hin und her beweglicher Schieber vorgesehen. Er ist Teil der Übergabeeinrichtung und dient dazu, die Holzquader, die über die gekrümmte Bewegungsbahn abwärts bewegt und auf dem Abförderer abgestellt worden sind, auf diesem einzeln quer zu verschieben, damit sie einzeln nacheinander zur Anlage am vorhergehend auf dem Abförderer abgestellten Holzquader gebracht werden kann.

Vorzugsweise ist der Schieber kammartig ausgebildet und hat Zinken, die in die Zwischenräume zwischen den Fördergliedern des Übergabeförderers eingreifen. Das hat den Vorteil, dass der Schieber kein Hinderungsgrund ist, den Übergabeförderer so anzuordnen, dass die Auflager sich erst auf dem Obertrum des Abförderers oder dicht oberhalb des Obertrums des Abförderers von den Holzquadern lösen, so dass diese sanft auf dem Obertrum des Abförderers abgestellt werden.

Der Schieber ist vorzugsweise mit einer Kurbel angetrieben. Das hat den Vorteil, dass er in seinen Umkehrpunkten (Totpunktlage) nicht hart anschlägt, sondern durch die Kurbelcharakteristik auf die Geschwindigkeit Null abgebremst wird, ohne dass Brems- oder Dämpfungseinrichtungen erforderlich wären. Durch den Kurbeltrieb werden die Holzquader optimal beschleunigt und verzögert. Ein weiterer Vorteil besteht darin, dass der Schieber durch einen Motor mit rotierender Antriebswelle stetig angetrieben werden kann. Vorzugsweise handelt es sich bei dem Motor um denselben Motor, welcher auch den Übergabeförderer antreibt und vorzugsweise auch die Einrichtung zum Vereinzeln der gestauten Holzquader, so dass die Bewegung des Schiebers zwangsweise mechanisch mit der Bewegung des Übergabeförderers und vorzugsweise auch mit der Einrichtung zum Vereinzeln der Holzquader gekoppelt ist. Für das Synchronisieren dieser drei Bestandteile der Vorrichtung ist deshalb keinerlei Steuerungsaufwand erforderlich.

Der Schieber könnte, wie im Stand der Technik bekannt, so arbeiten, dass er stets alle bereits auf dem Abförderer abgestellte Holzquader quer verschiebt. Das hätte jedoch die im Stand der Technik vorhandenen Nachteile. In Abkehr von der bekannten Arbeitsweise des Schiebers ist es vielmehr bevorzugt, dass der Abförderer quer zu sich selbst, d. h. in Förderrichtung des Zuförderers, verschiebbar ist.

Das hat den Vorteil, dass die Holzquader durch die Übergabeeinrichtung auf dem Abförderer von vorneherein auf einem Platz abgestellt werden, den sie auch im zu bildenden Stapel einnehmen. Der Abförderer wird deshalb während des Bildens eines Stapels von Holzquadern quer zu sich in der Weise verschoben, dass jeder Holzquader unmittelbar neben dem vorher abgestellten Holzquader abgestellt wird, der Abförderer also vom Abstellen eines Holzquaders bis zum Abstellen des nächsten Holzquaders um die Dicke des Holzquaders weiterbewegt wird, vorzugsweise synchron mit dem Antrieb der Übergabeeinrichtung. Die Querbewegung kann taktweise erfolgen, erfolgt jedoch vorzugsweise als eine gleichmäßige, kontinuierliche Bewegung. Ein vorzugsweise vorgesehener Schieber wird nur noch benutzt, um einen eventuellen Spalt zwischen den beiden zuletzt abgestellten Quadern schließen. Dazu muss er nur den letzten Holzquader geringfügig verschieben. Der dafür erforderliche Kraftaufwand ist gering und steigt mit größer werdendem Paket nicht an.

Zum Stützen des zuerst auf dem Abförderer abgestellten Holzquaders ist an diesem vorzugsweise ein Gegenhalter vorgesehen, welcher sich an dem der Übergabeeinrichtung abgewandten Rand des Abförderers befindet und vorzugsweise mit einer Sicherheitsabschaltung versehen ist. Dieser Gegenhalter ist vorzugsweise abgefedert, um der Bewegung des Schiebers erforderlichenfalls ausweichen zu können. Der Federweg, der dafür zur Verfügung gestellt wird, kann gering sein. Vorzugsweise wird der Gegenhalter durch einen oder zwei pneumatische Kurzhubzylinder abgefedert.

Ausführungsbeispiele der Erfindung sind schematisch in den beigefügten Zeichnungen dargestellt. Anhand der Zeichnungen werden weitere Merkmale und Vorteile der Erfindung beschrieben. Gleiche oder übereinstimmende Teile sind in den Zeichnungen mit übereinstimmenden Bezugszahlen bezeichnet.
- Figur 1: zeigt die wesentlichen Elemente einer erfindungsgemäßen Vorrichtung in einer schematischen Seitenansicht während des Zuförderns und Paketierens von quaderförmigen Holzstücken,
- Figur 2: zeigt die Vorrichtung aus Figur 1 vor dem Beginn des Paketierens,
- Figur 3: zeigt die Vorrichtung aus Figur 1 nach dem Paketieren, nämlich bei vollgestelltem Abförderer,
- Figur 4: zeigt eine praktisch ausgeführte erfindungsgemäße Vorrichtung in einer Seitenansicht,
- Figur 5: zeigt die Vorderansicht der in Figur 4 dargestellten Vorrichtung und
- Figur 6: zeigt die Draufsicht auf die in Figur 4 dargestellte Vorrichtung, und
- Figur 7: zeigt in einer Draufsicht die Anbindung von zwei Vorrichtungen der in den Figuren 4 bis 6 dargestellten Art in eine Pakete von Holzquadern verarbeitende Keilzinkenanlage

Figur 1 zeigt einen Zuförderer 1, ausgebildet als Waagerechtförderer mit mehreren parallel zueinander angeordneten endlosen Fördergliedern, welche über Umlenkräder 14 gespannt sind, von welchen eine Gruppe angetrieben ist. Bei den Fördergliedern kann es sich um Ketten oder Riemen, insbesondere Zahnriemen handeln.

Ein Übergabeförderer 2 weist ebenfalls eine Anzahl von endlosen Fördergliedern auf, welche mit Abstand parallel nebeneinander angeordnet und um Umlenkräder 15 und 16 gespannt sind, von welchen die Umlenkräder 15 angetrieben sind. Bei den Fördergliedern des Übergabeförderers 2 kann es sich ebenfalls um Ketten oder Riemen, insbesondere Zahnriemen handeln. Der Übergabeförderer 2 und der Zuförderer 1 sind einander überlappend angeordnet, indem Förderglieder des Übergabeförderers 2 in Zwischenräumen der Förderglieder des Zuförderers 1 liegen und umgekehrt.

An den Fördergliedern des Übergabeförderers 2 sind in regelmäßigen Abständen Auflager 3, z. B. Nocken, angeordnet.

Unterhalb des Zuförderers 1 ist ein Abförderer 10 angeordnet, welcher als Waagerechtförderer ausgebildet ist und eine Förderrichtung hat, die rechtwinklig zur Förderrichtung des Zuförderers 1 und des Übergabeförderers 2 verläuft. Der Abförderer 10 ist querverschieblich auf einer hin und her gehend antreibbaren Verschiebeeinrichtung 13 gelagert, welche parallel zur Förderrichtung des Zuförderers 1 hin und her verschiebbar ist.

Der Abförderer 10 hat ein breites Förderband, welches über zwei Umlenkwalzen gespannt ist, von welchen eine angetrieben ist. An jenem Rand des Förderbandes des Abförderers 10, welches den größeren Abstand vom Zuförderer 1 hat, ist ein sich in der Förderrichtung des Abförderers 10 erstreckender Gegenhalter 11 angeordnet, welcher durch einen oder mehrere pneumatische Kurzhubzylinder 12 abgefedert ist.

Oberhalb des Abförderers 10 ist in einem Abstand vom Ende des Übergabeförderers 2 eine senkrechte Führungsseinrichtung 17 vorgesehen. Der Abstand der Führungseinrichtung 17 vom Ende des Übergabeförderers 2 ist so gewählt, dass quaderförmige Holzstücke 18 mit der größten vorkommenden Dicke durch den Spalt zwischen der Führungseinrichtung 17 und dem Ende des Übergabeförderers 2 hindurchpassen.

Ein Schieber 6, welcher in Förderrichtung des Zuförderers 1 hin und her gehend antreibbar ist, ist zwischen dem Übergabeförderer 2 und dem Abförderer 10 angeordnet, und zwar mit allenfalls geringem Abstand zum Obertrum des Abförderers 10. Der Schieber 6 ist kammartig ausgebildet und hat Zinken, die in den Zwischenraum zwischen den Fördergliedern des Übergabeförderers 2 eingreifen, so dass der Schieber 6 und die Förderglieder des Übergabeförderers 2 einander überlappen. Der Schieber 6 ist mittels eines Kurbeltriebs 8 angetrieben. Der Antrieb erfolgt durch einen Motor 7, welcher nicht nur den Kurbeltrieb 8 treibt, sondern auch den Übergabeförderer 2, so dass diese zwangsweise miteinander synchronisiert sind.

Die Förderglieder des Übergabeförderers 2 verlaufen im Überlappungsbereich mit dem Zuförderer 1 und noch ein Stück darüber hinaus waagerecht und beschreiben anschließend eine über einen Winkel von 90° nach unten gekrümmte Bewegungsbahn mit einem verhältnismäßig großen Krümmungsradius von beispielsweise 30 cm bis 60 cm. Der tiefste Punkt der Förderglieder befindet sich an den Umlenkrädern 16, die einen demgegenüber (d. h. verglichen mit dem Krümmungsradius der Bewegungsbahn) kleinen Radius haben. Von den Umlenkrädern 16 steigt das Untertrum der Förderglieder des Übergabeförderers 2 an zu den angetriebenen Umlenkrädern 15.

### Die Vorrichtung arbeitet folgendermaßen:

Zu Beginn eines Paketierungsvorganges befindet sich der Abförderer 10 auf der Verschiebeeinrichtung 13 in seiner einen Endlage, in welcher die Führungseinrichtung 17 über dem Gegenhalter 11 steht, wie in Figur 2 dargestellt. Holzquader 18 werden vom Zuförderer 1 herangefördert, welcher sich schneller bewegt als der Übergabeförderer 2. Dadurch gelangen die Holzquader 18 im Überlappungsbereich des Zuförderers 1 und des Übergabeförderers 2 auf jeden Fall zur Anlage an einer Reihe der Auflager 3. Ein solcher Holzquader 18 wird an den Auflagern 3 und den Fördergliedern anliegend an der gekrümmten Bewegungsbahn entlang nach unten geführt und dabei allmählich aufgerichtet. Wenn die Auflager 3 in den Bereich der vorderen Umlenkrolle 16 gelangen, werden sie umgelenkt, wodurch sich der Holzquader 18 von dem Auflager 3 löst und im Spalt zwischen den Auflagern 3 und der Führungseinrichtung 17 das letzte kurze Stücken bis auf das Obertrum des Abförderers 10 herabgleitet, siehe Figur 1. Der erste Holzquader 18 eines Paketes landet in der Stellung, die in Figur 2 dargestellt ist, dicht vor dem Gegenhalter 11, an welchem er durch den Schieber 6 anschließend zur Anlage gebracht wird.

Bis der nächste Holzquader 18 auf dieselbe Weise auf den Abförderer 10 gelangt, ist dieser durch die Verschiebeeinrichtung 13 um die Dicke eines Holzquaders 18 im Sinne der Figur 1 nach rechts verschoben worden, so dass der zweite Holzquader 18 dicht neben dem ersten Holzquader 18 auf den Abförderer 10 abgesetzt wird. Auf diese Weise wird schrittweise ein Paket gebildet, siehe Figur 1, bis schließlich der Abförderer 10 über nahezu seine gesamte Breite mit Holzquadern 18 gefüllt ist, wie in Figur 3 dargestellt. In diesem Zustand wird das aus den Holzquadern 18 gebildete Paket abgefördert und der leere Abförderer 10 in seine Ausgangsstellung, Figur 2, zurückbewegt.

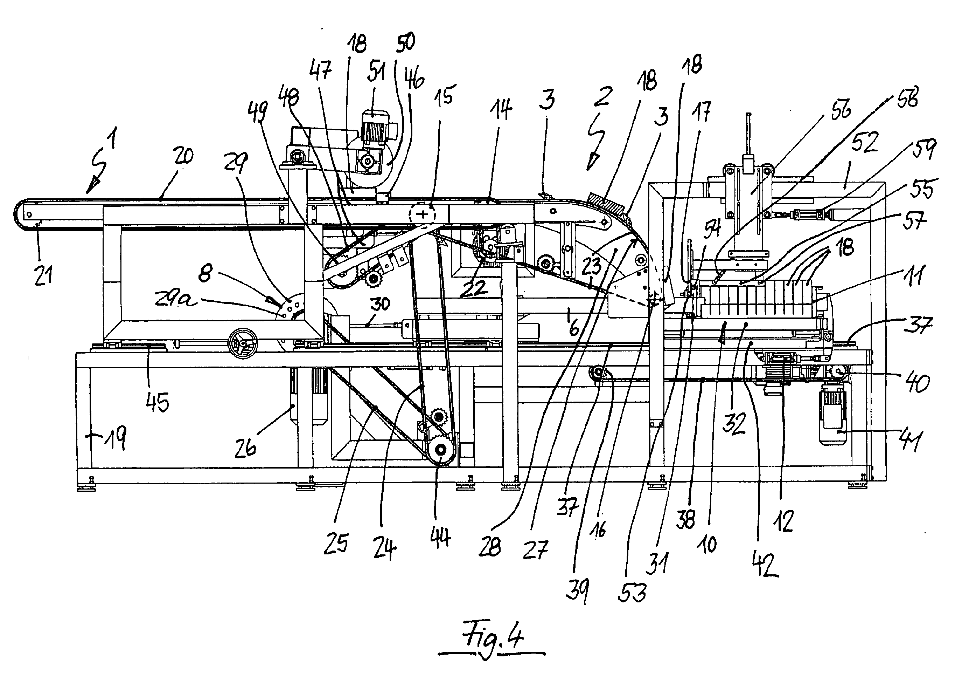

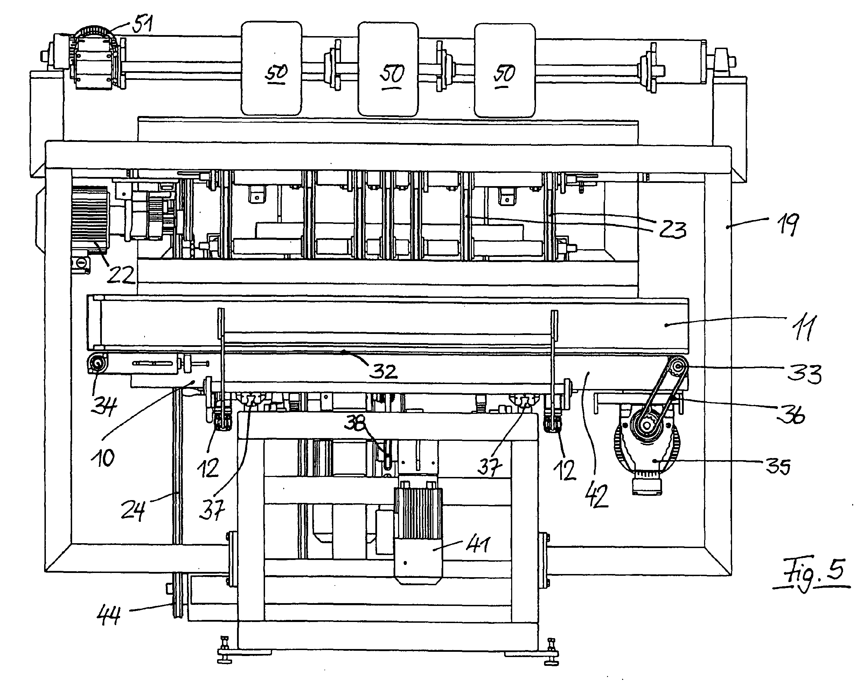

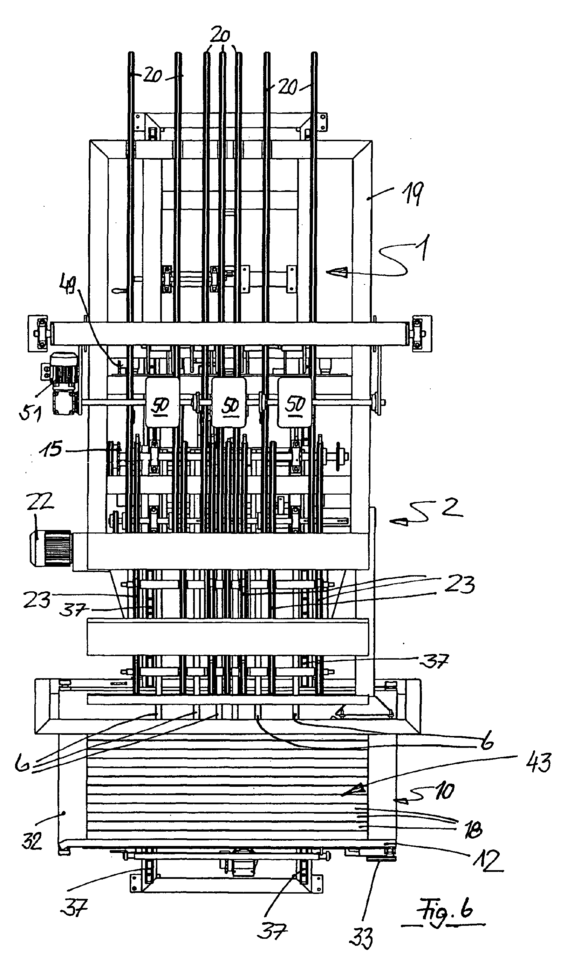

Die in den Figuren 1 bis 3 dargestellten wesentlichen Elemente der erfindungsgemäßen Vorrichtung sind auch in dem in den Figuren 4 bis 6 dargestellten Ausführungsbeispiel enthalten:

Die Vorrichtung hat ein Gestell 19, welches den Zuförderer 1, den Übergabeförderer 2 und den Abförderer 10 trägt. Der Zuförderer 1 hat als endlose Förderglieder 20 mehrere parallel mit Abstand nebeneinander angeordnete Ketten, welche über Zahnräder 14 und 21 gespannt und umgelenkt sind, von denen die Zahnräder 14 durch einen Motor 22 angetrieben sind.

Der Übergabeförderer 2 hat ebenfalls mehrere parallel nebeneinander angeordnete endlose Förderglieder 23 in Gestalt von Ketten, welche über Zahnräder 15 und 16 gespannt sind, von denen die Lage der Zahnräder 16 verdeckt und daher nur gestrichelt dargestellt ist. Die Gruppe der Zahnräder 15 ist durch eine Kette 24 angetrieben, welche ihrerseits durch eine Kette 25 von einem Elektromotor 26 angetrieben ist.

Die gekrümmte Bewegungsbahn 27 des Übergabeförderers 2 ist durch gekrümmte Leitelemente 28 vorgegeben, auf welcher die Ketten 23 gleiten. An den Ketten 23 sind in regelmäßigen Abständen Auflager 3 in Gestalt von Krallen vorgesehen, an welchen die zu paketierenden Holzquader 18 zur Anlage gelangen.

Der zwischen dem Übergabeförderer 2 und dem Abförderer 10 vorgesehene Schieber 6 wird mittels eines Kurbeltriebes 8 mit Kurbel 29 und Kurbelstange 30 durch den Elektromotor 26 angetrieben, so dass die Bewegungen des Übergabeförderers 2 und des Schiebers 6 mechanisch synchronisiert sind. Die Kurbel 29 ist als Scheibe mit Löchern 29a ausgebildet, die unterschiedliche Abstände von der Kurbelachse haben. An einem der Löcher 29a ist die Kurbelstange 30 angebracht, deren Hub vom Abstand des gewählten Loches 29 von der Kurbelachse abhängt. Die sich mit dem Übergabeförderer 2 überlappenden Zinken des Schiebers 6 haben Köpfe 31, die auf dem Obertrum des Abförderers 10 geleiten.

Der Abförderer 10 hat als endloses Förderglied 32 ein breites Förderband, welches über zwei Umlenkwalzen 33 und 34 gespannt ist, von denen die Umlenkwalze 33 von einem Elektromotor 35 mittels einer Kette 36 angetrieben ist.

Der Abförderer 10 ist auf zwei Schienen 37 gelagert, welche am Gestell 19 befestigt sind und sich in der Förderrichtung des Zuförderers 1 bis in die Nähe der Kurbel 29 erstrecken. Auf diesen Schienen 37 ist der Abförderer 10 quer zu seiner Förderrichtung hin und her gehend verschiebbar. Zu diesem Zweck ist eine Kette 38 vorgesehen, welche über Zahnräder 39 und 40 gespannt ist, von denen das Zahnrad 40 durch einen Motor 41 antreibbar ist. Die Enden der Kette 38 sind an einem Schlitten 42 angebracht, welcher auf den Schienen 37 gleitet und den Abförderer 10 trägt.

Auf den Schienen 37 und auf in ihrer Flucht liegenden weiteren Schienen 45 sind außerdem der Zuförderer 1 und der mit ihm verbundene Übergabeförderer 2 gelagert. Die Schienen 37 und 45 erlauben es, die Lage des Zuförderers 1 und des Übergabeförderers 2 in ihrer Förderrichtung zu Anpassungszwecken zu verändern. Aus diesem Grund ist das Zahnrad 15, welches die Förderglieder 20 des Zuförderers 2 treibt nicht auf kurzem Wege vom Elektromotor 26 angetrieben, sondern über das tief angeordnete Zahnrad 44 und die lange Kette 24. Die Schienen 37 tragen außerdem den Schieber 6.

Wie im Beispiel der Figuren 1 bis 3 ist der Zuförderer 1 schneller antreibbar als der Übergabeförderer 2. Damit die vom Zuförderer 1 herangeförderten Holzquader 18 passend zum Raster, in welchem die Auflager 3 vorgesehen sind, an den Übergabeförderer 2 übergeben werden, ist zwischen den Fördergliedern 20 des Zuförderers 1 eine Reihe von Anschlägen 46 vorgesehen, an welchen die Holzquader 18 zunächst einmal gestoppt und aufgestaut werden. Hebenocken 47, welche zwischen den Anschlägen 46 angeordnet sind, sind synchron mit dem Übergabeförderer 2 antreibbar. Zu diesem Zweck treibt eine Kette 48, welche vom Motor 26 über die Ketten 25 und 24 angetrieben ist, ein Zahnrad 49, welches mittels eines Exzenters die Hebenocken 47 in einem mit dem Antrieb des Übergabeförderers 2 synchronisierten Takt anhebt. Dadurch wird der jeweils unmittelbar an den Anschlägen 46 liegende Holzquader 18 von den Fördergliedern 20 des Zuförderers 1 einzeln abgehoben und bis über die Anschläge 46 angehoben. Er kommt dabei in Berührung mit Gummirädern 50, die - vorzugsweise ununterbrochen - durch einen Motor 51 angetrieben sind. Die Gummiräder 50 befördern den Holzquader 18 über die Anschläge 46 hinweg. Auf diese Weise werden die Holzquader einzeln und im Takt der am Zahnrad 15 auftauchenden Auflager 3 an den Übergabeförderer 2 übergeben. Dadurch ist sichergestellt, dass an den Auflagern 3 jeweils nur ein einziger Holzquader 18 zur Anlage kommt, auch dann, wenn der Zuförderer 1 ständig läuft und der Übergabeförderer 2 zeitweise stillgesetzt wird, z. B. während ein Paket aus Holzquadern 18 vom Abförderer 10 abgefördert, siehe Figur 3, und der Abförderer 10 in seine Ausgangslage, siehe Figur 2, zurückbewegt wird.

Holzquader 18, die durch Herüberheben über die Anschläge 46 vereinzelt werden und dann einzeln zur Anlage an Auflagern 3 des Übergabeförderers 2 gelangen, werden entlang der nach unten gekrümmten Bewegungsbahn 27 auf dem Förderband 32 des Abförderers 10 abgesetzt. Ein Umfallen der Holzquader 18 wird dadurch verhindert, dass die Holzquader 18 zwischen dem Schieber 6 und einer dem Übergabeförderer 2 gegenüberliegenden Führungseinrichtung 17 landen, welche z. B. aus zwei zueinander parallelen Stäben, Schienen oder Flacheisen bestehen kann, die einen Abstand voneinander haben. Die Führungseinrichtung 17 ist an einer Traverse 52 des Gestells 19 aufgehängt und kann zur Anpassung an unterschiedlich hohe Holzquader 18 in der Höhe so verstellt werden, dass die Holzquader 18, die hochkant stehend auf dem Abförderer 10 abgestellt wurden, mittels des Schiebers 6 unter der Führungseinrichtung 17 hindurch geschoben werden können.

Damit die Holzquader 18 nicht durch den Spalt zwischen der Führungseinrichtung 17 und dem Förderband 32 des Abförderers 10 hindurch umkippen, ist in der Nähe des unteren Randes der Führungseinrichtung 17 eine Klinke 53 vorgesehen, welche um eine waagerechte Achse 54 aus ihrer in Figur 4 gezeichneten Lage, in welcher sie senkrecht nach unten hängt, in eine Schräglage hochgeschwenkt werden kann, wenn der Schieber 6 einen Holzquader 18 gegen die Klinke 53 schiebt. Die Achse 54 befindet sich an einem Hebel 55, welcher an einem Schlitten 56 angelenkt ist, welcher höhenverstellbar an der Traverse 52 angebracht ist und auch die Führungseinrichtung 17 trägt. Die Achse, um welche der Hebel 55 verschwenkbar ist, ist mit 57 bezeichnet.

Wird ein Holzquader 18 durch den Schieber 6 gegen die Klinke 53 geschoben, dann wird diese in eine fest vorgegebene Schräglage geschwenkt. Über die Schrägfläche, welche die Klinke dem zu verschiebenden Holzquader 18 darbietet, wird die Klinke und mit ihr der Hebel 55, an welchem sie sich befindet, durch Verschwenken des Hebels 55 und seiner Achse 57 angehoben, bis der Holzquader 18 die Klinke 53 passiert hat. Dann fallen die Klinke 53 und der Hebel 55 in ihre Ausgangslage zurück. Die Ausgangslage des Hebels 55 ist dadurch gesichert, dass der Hebel 55 durch eine Kette 58 mit dem Schlitten 56 verbunden ist. Die Ausgangslage des Hebels 55 ist - wie in Figur 4 dargestellt - waagerecht.

Sollte sich einmal ein Holzquader 18 zwischen dem Übergabeförderer 2 und der Führungseinrichtung 17 und/oder der Klinke 53 verkeilen, dann kann der Schlitten 56 gegen eine pneumatische Feder 59 zurückweichen. Die pneumatische Feder 59 ist mit einem Schalter gekoppelt, welcher daraufhin den Antrieb der Maschine zur Sicherheit abschaltet.

Hat der auf dem Abförderer 10 gebildete Stapel aus Holzquadern 18 eine vorgegebene Breite erreicht, wird der Übergabeförderer 2 vorübergehend stillgesetzt und der Stapel aus den Holzquadern 18 durch Antreiben des Förderbandes 32 abgefördert. Danach wird der Abförderer 10 durch Antreiben der Kette 38 in seiner Ausgangsstellung zurückbewegt, in welcher der Gegenhalter 11 sich in unmittelbarer Nähe der Führungseinrichtung 17 befindet.

Wenn der Zuförderer 1 den Übergabeförderer 2 stetig mit Holzquadern 18 beschickt, kann der Motor 41, welcher das Querverschieben des Abförderers 10 bewirkt, so gesteuert werden, dass er sich stetig bewegen kann, bis die vorgesehene Stapelbreite erreicht ist.

Figur 4 zeigt die Vorrichtung in einer Phase in welcher ein Paket 43 aus Holzquadern 18 auf dem Abförderer 10 nahezu vollständig ist.

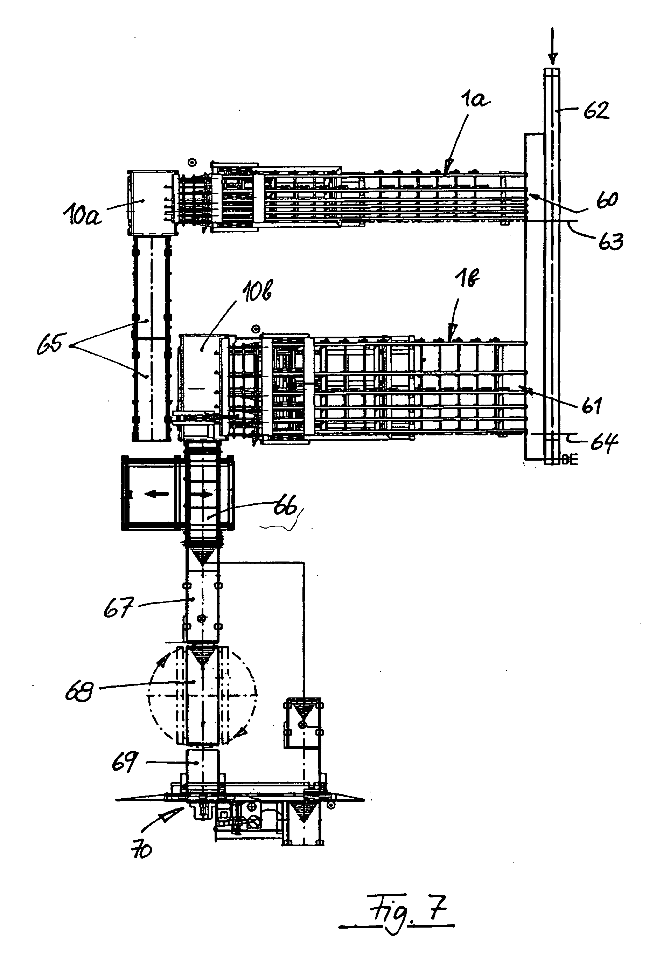

Figur 7 zeigt einen Ausschnitt aus einem Stellplan einer Anlage, welche zu Paketen zusammengestellte Holzquader verarbeitet. Zwei Vorrichtungen 60 und 61 der in den Figuren 4 bis 6 dargestellten Art sind nebeneinander aufgestellt. Sie unterscheiden sich im Wesentlichen in ihrer Breite und dienen zum Paketieren von unterschiedlich langen Holzquadern, die von einer Kappsäge herkommend auf einem waagerechten Förderband 62 herangefördert werden. Kürzere Holzquader werden an der schmaleren Vorrichtung 60 gegen einen ersten Anschlag 63 positioniert und an den Zuförderer 1 a der schmaleren Vorrichtung 60 übergeben. Längere Holzquader werden an der breiteren Vorrichtung 61 gegen einen zweiten Anschlag 64 positioniert und in dieser Ausrichtung an den Zuförderer 1b der zweiten Vorrichtung 61 übergeben. Die kürzeren Holzquader werden auf einem erfindungsgemäßen Abförderer 10a zu einem Paket zusammengestellt, an welchen sich ein aus zwei Abschnitten zusammengesetzter Waagerechtförderer 65 anschließt. Die längeren Holzquader werden auf einem erfindungsgemäßen Abförderer 10b zu einem Paket zusammengestellt. Daran schließt sich ein quer zu seiner Förderrichtung verschiebbarer Waagerechtförderer 66 an, welcher auch als Shuttle bezeichnet wird. Der Shuttle 66 wird nach Bedarf entweder vor den Abförderer 10b oder vor den Waagerechtförderer 65 geschoben, um von dort ein Paket aus Holzquadern zu übernehmen und an einen stationären Waagerechtförderer 67 zu übergeben, welcher ihn an einen weiteren Waagerechtförderer 68 übergibt, welcher auf einem Drehgestell montiert ist, welcher den Waagerechtförderer 68 um jeweils 180° zu drehen vermag.

Vom Waagerechtförderer 68 gelangen die Holzquader auf einen Arbeitstisch 69, welcher zu einer Fräsmaschine 70 gehört, welche in die ersten Enden der Holzquader ein Keilzinkenprofil fräst. Ist das geschehen, werden die Holzquader auf den drehbaren Waagerechtförderer 68 zurückbewegt, mit diesem um 180° verschwenkt und dann mit ihren zweiten Enden dem Fräswerkzeug zugeführt, um in diese zweiten Enden ein Keilzinkenprofil zu fräsen, welches zu dem in die ersten Enden gefrästen Keilzinkenprofil komplementär ist.

Die Fräsmaschine ist die Eingangsstation einer Holzquader miteinander verleimt werden.

### Bezugszahlenliste:

- 1.: Zuförderer
- 1 a.: Zuförderer
- 1b.: Zuförderer
- 2.: Übergabeförderer
- 3.: Auflager
- 4.: ---
- 5.: ---
- 6.: Schieber
- 7.: Motor
- 8.: Kurbeltrieb
- 9.: ---
- 10.: Abförderer
- 11.: Gegenhalter
- 12.: Kurzhubzylinder
- 13.: Verschiebeeinrichtung
- 14.: Zahnräder
- 15.: Zahnräder
- 16.: Zahnräder
- 17.: Führungseinrichtung
- 18.: Holzquader
- 19.: Gestell
- 20.: Förderglieder
- 21.: Zahnräder
- 22.: Motor
- 23.: Förderglieder
- 24.: Kette
- 25.: Kette
- 26.: Elektromotor
- 27.: Bewegungsbahn
- 28.: Leitelement
- 29.: Kurbel
- 29a.: Löcher
- 30.: Kurbelstange
- 31.: Köpfe
- 32.: Förderglied
- 33.: Umlenkwalze
- 34.: Umlenkwalze
- 35.: Elektromotor
- 36.: Kette
- 37.: Schiene
- 38.: Kette
- 39.: Zahnräder
- 40.: Zahnräder
- 41.: Motor
- 42.: Schlitten
- 43.: Paket
- 44.: Zahnrad
- 45.: Schiene
- 46.: Anschläge
- 47.: Hebenocken
- 48.: Kette
- 49.: Zahnrad
- 50.: Gummiräder
- 51.: Motor
- 52.: Traverse
- 53.: Klinke
- 54.: Achse von 53
- 55.: Hebel
- 56.: Schlitten
- 57.: Achse von 55
- 58.: Kette
- 59.: pneumatische Feder
- 60.: schmalere Vorrichtung
- 61.: breitere Vorrichtung
- 62.: Förderband
- 63.: erster Anschlag
- 64.: zweiter Anschlag
- 65.: Waagerechtförderer
- 66.: Shuttle
- 67.: stationärer Waagerechtförderer
- 68.: drehbarer Waagerechtförderer
- 69.: Arbeitstisch
- 70.: Fräsmaschine

- 101.: Zuförderer
- 102.: Holzquader
- 103.: Schwenkarm
- 104.: waagerechte Achse
- 105.: Umlenkräder
- 106.: Waagerechtförderer
- 107.: Gegenhalter
- 108.: Rollenbahn
- 109.: Drehachse
- 110.: ---
- 111.: Zuförderer
- 112.: Holzquader
- 113.: Abförderer
- 114.: Führungseinrichtung
- 115.: Querschieber
- 116.: Gegenhalter

## Patentansprüche

1. Vorrichtung zum Fördern und Paketieren von Holzquadern (18), welche zwei Schmalseiten, zwei Breitseiten und zwei Endflächen haben,
mit einem Zuförderer (1), auf welchem die Holzquader (18) einzeln auf ihrer Breitseite liegend quer zu ihrer Längserstreckung gefördert werden,
mit einem Abförderer (10), auf welchem die Holzquader (18) hochkant auf ihren Schmalseiten liegend und zu einem Paket (43) zusammengestellt in ihrer Längsrichtung quer zur Förderrichtung des Zuförderers (1) abgefördert werden,
und mit einer Übergabeeinrichtung (2, 6), welche die auf ihrer Breitseite liegend zugeförderten Holzquader (18) aufrichtet, hochkant liegend an den Abförderer (10) übergibt
und auf diesem zu dem Paket (43) zusammenbringt,
wobei der Abförderer (10) tiefer angeordnet ist als der Zuförderer (1),
**dadurch gekennzeichnet, dass** die Übergabeeinrichtung (2, 6) eine den Zuförderer (1) fortsetzende, abwärts gekrümmte Bewegungsbahn (27) und synchron mit dem Zuförderer (1) antreibbare Auflager (3) aufweist, welche sich entlang der gekrümmten Bewegungsbahn (27) abwärts bewegen und auf welchen die Holzquader (18) dabei mit einer ihrer Schmalseiten liegen,
und dass die Übergabeeinrichtung (2, 6) eine unter einem Winkel zu den Auflagern (3) angeordnete Stützeinrichtung (23, 28) aufweist, an welcher die Holzquader (18) bei ihrer Abwärtsbewegung mit einer ihrer Breitseiten anliegen.

2. Vorrichtung nach Anspruch 1, **dadurch gekennzeichnet, dass** der Zuförderer (1) ein Waagerechtförderer ist.

3. Vorrichtung nach Anspruch 2, **dadurch gekennzeichnet, dass** der Abförderer (10) ein Waagerechtförderer ist.

4. Vorrichtung nach einem der vorstehenden Ansprüche, **dadurch gekennzeichnet, dass** der Abförderer (10) als Förderglied ein endloses antreibbares Band (32) hat.

5. Vorrichtung nach einem der vorstehenden Ansprüche, **dadurch gekennzeichnet, dass** der Zuförderer (1) als antreibbare, endlose Förderglieder (20) parallel zueinander verlaufende Ketten, Riemen oder Zahnriemen hat.

6. Vorrichtung nach Anspruch 5, **dadurch gekennzeichnet, dass** die endlosen Förderglieder (20) des Zuförderers (1) Abstand voneinander haben.

7. Vorrichtung nach Anspruch 5, **dadurch gekennzeichnet, dass** zwischen den Fördergliedern (20) des Zuförderers (1) in einer Reihe nebeneinander angeordnete Anschläge (46) vorgesehen sind, welche über das Obertrum der Förderglieder (20) vorstehen,
und dass eine Einrichtung (47-51) vorgesehen ist, welche einen am Anschlag (46) liegenden Holzquader (18) einzeln über den Anschlag (46) hinwegheben kann.

8. Vorrichtung nach Anspruch 7, **dadurch gekennzeichnet, dass** die Einrichtung (47-51) mit dem Antrieb (26) des Übergabeförderers synchronisiert ist.

9. Vorrichtung nach einem der vorstehenden Ansprüche, **dadurch gekennzeichnet, dass** die Auflager (3) getrennt von den Fördergliedern (20) des Zuförderers (1) bewegbar sind.

10. Vorrichtung nach Anspruch 9, **dadurch gekennzeichnet, dass** die Übergabeeinrichtung (2, 6) einen Übergabeförderer (2) aufweist, welcher mehrere parallel mit Abstand nebeneinander verlaufende endlose Förderglieder (23) hat, an welchen die Auflager (3) angebracht sind, wobei Förderglieder (20) des Zuförderers (1) zwischen Fördergliedern (23) des Übergabeförderers (2) und Förderglieder (23) des Übergabeförderers (2) zwischen Fördergliedern (20) des Zuförderers (1) liegen.

11. Vorrichtung nach Anspruch 10, **dadurch gekennzeichnet, dass** das Obertrum der Förderglieder (20) des Zuförderers (1) und das Obertrum der Förderglieder (23) des Übergabeförderers (2) in ihrem Überlappungsbereich höhengleich oder annähernd höhengleich angeordnet sind.

12. Vorrichtung nach einem der Ansprüche 9 bis 11, **dadurch gekennzeichnet, dass** der Zuförderer (1) schneller antreibbar ist als die Auflager (3).

13. Vorrichtung nach einem der Ansprüche 10 bis 12, **dadurch gekennzeichnet, dass** die Förderglieder (23) des Übergabeförderers (2) Ketten, Riemen oder Zahnriemen sind.

14. Vorrichtung nach Anspruch 13, **dadurch gekennzeichnet, dass** die Auflager (3) Nocken sind.

15. Vorrichtung nach Anspruch 13, **dadurch gekennzeichnet, dass** der Übergabeförderer (2) als Förderglieder (23) Ketten hat und dass an den Ketten als Auflager (3) Krallen vorgesehen sind.

16. Vorrichtung nach einem der vorstehenden Ansprüche, **dadurch gekennzeichnet, dass** der Zuförderer (1) und die Auflager (3) durch einen gemeinsamen Motor (26) angetrieben sind.

17. Vorrichtung nach einem der vorstehenden Ansprüche, **dadurch gekennzeichnet, dass** zwischen dem Zuförderer (1) und dem Abförderer (10) ein parallel zum Obertrum des Abförderers (10) hin und her beweglicher Schieber (6) vorgesehen ist.

18. Vorrichtung nach Anspruch 10 und 17, **dadurch gekennzeichnet, dass** der Schieber (6) kammartig ausgebildet ist und Zinken hat, die in die Zwischenräume zwischen den Fördergliedern (23) des Übergabeförderers (2) eingreifen.

19. Vorrichtung nach Anspruch 17 oder 18, **dadurch gekennzeichnet, dass** der Schieber (6) mittels einer Kurbel (29) angetrieben ist.

20. Vorrichtung nach einem der Ansprüche 17 bis 19, **dadurch gekennzeichnet, dass** der Schieber (6) synchron mit den Auflagern (3) antreibbar ist.

21. Vorrichtung nach Anspruch 20, **dadurch gekennzeichnet, dass** der Schieber (6) und die Auflager (3) vom selben Motor (26) angetrieben sind.

22. Vorrichtung nach einem der vorstehenden Ansprüche in Verbindung mit Anspruch 13, **dadurch gekennzeichnet, dass** der Antrieb für das in Förderrichtung des Zuförderers (1) erfolgende Verschieben des Abförderers (10) mit dem Antrieb der Auflager (3) synchronisiert ist.

23. Vorrichtung nach einem der vorstehenden Ansprüche, **dadurch gekennzeichnet, dass** der Abförderer (10) in Förderrichtung des Zuförderers (1) verschiebbar ist.

24. Vorrichtung nach Anspruch 23, **dadurch gekennzeichnet, dass** der Abförderer (10) während des Paketiervorgangs gleichmäßig und kontinuierlich quer verschiebbar ist.

25. Vorrichtung nach Anspruch 23 oder 24, **dadurch gekennzeichnet, dass** der Abförderer (10) annähernd um seine Breite hin und her quer verschiebbar ist.

26. Vorrichtung nach einem der vorstehenden Ansprüche, **dadurch gekennzeichnet, dass** am Abförderer (10) ein dem Zuförderer (1) zugewandter Gegenhalter (11) vorgesehen ist.

27. Vorrichtung nach Anspruch 26, **dadurch gekennzeichnet, dass** der Gegenhalter (11) abgefedert ist.

28. Vorrichtung nach Anspruch 27, **dadurch gekennzeichnet, dass** der Gegenhalter (11) pneumatisch abgefedert ist, vorzugsweise durch einen oder mehrere Kurzhubzylinder (12).

29. Vorrichtung nach einem der vorstehenden Ansprüche, **dadurch gekennzeichnet, dass** der Übergabeeinrichtung (2) gegenüberliegend über dem Abförderer (10) eine sich von oben nach unten erstreckende Führungseinrichtung (17) vorgesehen ist, welche ein Umfallen von Holzquadern (18) auf dem Abförderer (10) verhindern soll.

30. Vorrichtung nach Anspruch 29, **dadurch gekennzeichnet, dass** die Führungseinrichtung (17) höhenverstellbar ist.

31. Vorrichtung nach Anspruch 29 oder 30, **dadurch gekennzeichnet, dass** der Führungseinrichtung (17) eine Klinke (53) zugeordnet ist, welche um eine waagerechte Achse (54) verschwenkbar ist.

32. Vorrichtung nach Anspruch 31, **dadurch gekennzeichnet, dass** die Klinke (53) um weniger als 90° verschwenkbar ist und an einem Hebel (55) angelenkt ist, welcher seinerseits um eine zur Achse (54) der Klinke (53) parallele Achse (54) verschwenkbar ist.

33. Vorrichtung nach Anspruch 32, **dadurch gekennzeichnet, dass** die Achse (54) des Hebels (55) höhenverstellbar gelagert ist.

34. Vorrichtung nach Anspruch 33, **dadurch gekennzeichnet, dass** die Achse (54) des Hebels (55) gemeinsam mit der Führungseinrichtung (17) höhenverstellbar ist.

35. Die Verwendung einer Vorrichtung nach einem der vorstehenden Ansprüche zum Paketieren von Holzquadern (18), welche durch den Abförderer (10) einer Keilzinkenanlage zugeführt werden.

## Claims

1. Device for conveying and packeting wooden blocks (18), which have two narrow sides, two wide sides, and two end surfaces,
having an incoming conveyor (1), on which the wooden blocks (18) are individually supplied resting on their wide side transversely to their longitudinal extension,
having an outgoing conveyor (10), on which the wooden blocks (18) are conveyed away on edge resting on their narrow sides and assembled into a packet (43) in their longitudinal direction transversely to the conveyor direction of the incoming conveyor (1),
and having a transfer apparatus (2, 6), which orients the wooden blocks (18) supplied resting on their wide side and transfers them resting on edge to the outgoing conveyor (10),
and brings them together thereon to the packet (43),
the outgoing conveyor (10) being situated lower than the incoming conveyor (1), **characterized in that** the transfer apparatus (2, 6) has a downwardly curved movement path (27), which continues the incoming conveyor (1), and brackets (3) which are drivable synchronously with the incoming conveyor (1), and which move downward along the curved movement path (27) and on which the wooden blocks (18) rest on one of their narrow sides,
and the transfer apparatus (2, 6) has a support apparatus (23, 28) situated at an angle to the brackets (3), on which the wooden blocks (18) rest on one of their wide sides during their downward movement.

2. Device according to Claim 1, **characterized in that** the incoming conveyor (1) is a horizontal conveyor.

3. Device according to Claim 2, **characterized in that** the outgoing conveyor (10) is a horizontal conveyor.

4. Device according to one of the preceding claims, **characterized in that** the outgoing conveyor (10) has an endless drivable band (32) as a conveyor element.

5. Device according to one of the preceding claims, **characterized in that** the incoming conveyor (1) has chains, belts, or toothed belts running parallel to one another as the drivable, endless conveyor elements (20).

6. Device according to Claim 5, **characterized in that** the endless conveyor elements (20) of the incoming conveyor (1) have a spacing from one another.

7. Device according to Claim 5, **characterized in that** stops (46) situated in a row adjacent to one another, which protrude above the upper belt of the conveyor elements (20), are provided between the conveyor elements (20) of the incoming conveyor (1),
and an apparatus (47-51) is provided, which can lift a wooden block (18) resting on a stop (46) individually over the stop (46).

8. Device according to Claim 7, **characterized in that** the apparatus (47-51) is synchronized with the drive (26) of the transfer conveyor.

9. Device according to one of the preceding claims, **characterized in that** the brackets (3) are movable separately from the conveyor elements (20) of the incoming conveyor (1).

10. Device according to Claim 9, **characterized in that** the transfer apparatus (2, 6) has a transfer conveyor (2), which has multiple endless conveyor elements (23) running parallel adjacent to one another with spacing, on which the brackets (3) are attached, conveyor elements (20) of the incoming conveyor (1) lying between conveyor elements (23) of the transfer conveyor (24) and conveyor elements (23) of the transfer conveyor (2) lying between conveyor elements (20) of the incoming conveyor (1).

11. Device according to Claim 10, **characterized in that** the upper belt of the conveyor elements (20) of the incoming conveyor (1) and the upper belt of the conveyor elements (23) of the transfer conveyor (2) are situated at equal height or approximately equal height in their overlap area.

12. Device according to one of Claims 9 through 11, **characterized in that** the incoming conveyor (1) is drivable more rapidly than the brackets (3).

13. Device according to one of Claims 10 through 12, **characterized in that** the conveyor elements (23) of the transfer conveyor (2) are chains, belts, or toothed belts.

14. Device according to Claim 13, **characterized in that** the brackets (3) are cams.

15. Device according to Claim 13, **characterized in that** the transfer conveyor (2) has chains as conveyor elements (23), and claws are provided on the chains as the brackets (3).

16. Device according to one of the preceding claims, **characterized in that** the incoming conveyor (1) and the brackets (3) are driven by a common motor (26).

17. Device according to one of the preceding claims, **characterized in that** a slide (6), which is movable back-and-forth parallel to the upper belt of the outgoing conveyor (10), is provided between the incoming conveyor (1) and the outgoing conveyor (10).

18. Device according to Claims 10 and 17, **characterized in that** the slide (6) is implemented as comb-like and has tines which engage in the intermediate spaces between the conveyor elements (23) of the transfer conveyor (2).

19. Device according to Claim 17 or 18, **characterized in that** the slider (6) is driven using a crank (29).

20. Device according to one of Claims 17 through 19, **characterized in that** the slide (6) is drivable synchronously with the brackets (3).

21. Device according to Claim 20, **characterized in that** the slide (6) and the brackets (3) are driven by the same motor (26).

22. Device according to one of the preceding claims in connection with Claim 13, **characterized in that** the drive for the displacement of the outgoing conveyor (10), which occurs in the conveyor direction of the incoming conveyor (1), is synchronized with the drive of the brackets (3).

23. Device according to one of the preceding claims, **characterized in that** the outgoing conveyor (10) is displaceable in the conveyor direction of the incoming conveyor (1).

24. Device according to Claim 23, **characterized in that** the outgoing conveyor (10) is transversely displaceable uniformly and continuously during the packeting procedure.

25. Device according to Claim 23 or 24, **characterized in that** the outgoing conveyor (10) is transversely displaceable back and forth by approximately its width.

26. Device according to one of the preceding claims, **characterized in that** a buttress (11) facing toward the incoming conveyor (1) is provided on the outgoing conveyor (10).

27. Device according to Claim 26, **characterized in that** the buttress (11) is spring-loaded.

28. Device according to Claim 27, **characterized in that** the buttress (11) is pneumatically spring-loaded, preferably by one or more short-stroke cylinders (12).

29. Device according to one of the preceding claims, **characterized in that** a guide apparatus (17) extending from top to bottom is provided opposite to the transfer apparatus (2) over the outgoing conveyor (10), which is to prevent wooden blocks (18) from falling off of the outgoing conveyor (10).

30. Device according to Claim 29, **characterized in that** the guide apparatus (17) is adjustable in height.

31. Device according to Claim 29 or 30, **characterized in that** a detent (53), which is pivotable around a horizontal axis (54), is associated with the guide apparatus (17).

32. Device according to Claim 31, **characterized in that** the detent (53) is pivotable by less than 90° and is linked to a lever (55), which is in turn pivotable around an axis (54) parallel to the axis (54) of the detent (53).

33. Device according to Claim 32, **characterized in that** the axis (54) of the lever (55) is mounted so it is adjustable in height.

34. Device according to Claim 33, **characterized in that** the axis (54) of the lever (55) is adjustable in height jointly with the guide apparatus (17).

35. The use of a device according to one of the preceding claims for packeting wooden blocks (18), which are supplied by the outgoing conveyor (10) to a dovetailing facility.

## Revendications

1. Dispositif de transport et de paquetage de pièces de bois parallélépipédiques (18) qui présentent deux petits côtés, deux côtés larges et deux surfaces d'extrémité,
avec un dispositif d'amenée (1), sur lequel sont transportées les pièces de bois parallélépipédiques (18) individuellement se trouvant sur leur côté large transversalement à leur développement longitudinal,
avec un dispositif d'évacuation (10), sur lequel les pièces de bois parallélépipédiques (18) sont évacuées, celles-ci se trouvant sur chant sur leurs petits côtés et assemblées en un paquet (43) dans leur sens longitudinal transversalement au sens de transport du dispositif d'amenée (1),
et avec un dispositif de remise (2, 6) qui redresse les pièces de bois parallélépipédiques (18) transportées se trouvant sur leur côté large, les remet, celles-ci se trouvant sur chant, au dispositif d'évacuation (10)
et les rassemble sur celui-ci en un paquet (43),
le dispositif d'évacuation (10) étant disposé plus bas que le dispositif d'amenée (1),
**caractérisé en ce que** le dispositif de remise (2, 6) présente une voie de déplacement (27) courbée vers le bas, prolongeant le dispositif d'amenée (1) et un appui (3) pouvant être entraîné de manière synchrone avec le dispositif d'amenée (1), qui se déplace vers le bas le long de la voie de déplacement (27) courbée et sur lequel les pièces de bois parallélépipédiques (18) se trouvent avec l'un de leurs petits côtés,
et **en ce que** le dispositif de remise (2, 6) présente un dispositif d'appui (23, 28) disposé dans un angle par rapport aux appuis (3), sur lequel reposent les pièces de bois parallélépipédiques (18) lors de leur déplacement vers le bas avec l'un de leurs côtés larges.

2. Dispositif selon la revendication 1, **caractérisé en ce que** le dispositif d'amenée (1) est un convoyeur horizontal.

3. Dispositif selon la revendication 2, **caractérisé en ce que** le dispositif d'évacuation (10) est un convoyeur horizontal.

4. Dispositif selon l'une quelconque des revendications précédentes, **caractérisé en ce que** le dispositif d'évacuation (10) présente comme organe de transport une bande (32) pouvant être entraînée sans fin.

5. Dispositif selon l'une quelconque des revendications précédentes, **caractérisé en ce que** le dispositif d'amenée (1) présente comme organes de transport (20) sans fin, pouvant être entraînés des chaînes, des courroies ou des courroies dentées s'étendant parallèlement les unes aux autres.

6. Dispositif selon la revendication 5, **caractérisé en ce que** les organes de transport (20) sans fin du dispositif d'amenée (1) présentent une distance les uns par rapport aux autres.

7. Dispositif selon la revendication 5, **caractérisé en ce qu'**entre les organes de transport (20) du dispositif d'amenée (1) sont prévues des butées (46) disposées en ligne les unes à côté des autres, qui dépassent du brin supérieur des organes de transport (20),
et **en ce qu'**un dispositif (47-51) est prévu, lequel peut lever une pièce de bois parallélépipédique (18) se trouvant sur la butée (46) individuellement au-delà de la butée (46).

8. Dispositif selon la revendication 7, **caractérisé en ce que** le dispositif (47-51) est synchronisé avec l'entraînement (26) du convoyeur de remise.

9. Dispositif selon l'une quelconque des revendications précédentes, **caractérisé en ce que** les appuis (3) sont mobiles séparément des organes de transport (20) du dispositif d'amenée (1).

10. Dispositif selon la revendication 9, **caractérisé en ce que** le dispositif de remise (2, 6) présente un convoyeur de remise (2) qui est doté de plusieurs organes de transport (23) sans fin, s'étendant parallèlement à distance les uns à côté des autres, sur lesquels sont montés les appuis (3), des organes de transport (20) du dispositif d'amenée (1) se trouvant entre des organes de transport (23) du convoyeur de remise (2) et des organes de transport (23) du convoyeur de remise (2) se trouvant entre des organes de transport (20) du dispositif d'amenée (1).

11. Dispositif selon la revendication 10, **caractérisé en ce que** le brin supérieur des organes de transport (20) du dispositif d'amenée (1) et le brin supérieur des organes de transport (23) du convoyeur de remise (2) sont disposés dans leur zone de recouvrement à la même hauteur ou approximativement à la même hauteur.

12. Dispositif selon l'une quelconque des revendications 9 à 11, **caractérisé en ce que** le dispositif d'amenée (1) peut être entraîné plus rapidement que les appuis (3).

13. Dispositif selon l'une quelconque des revendications 10 à 12, **caractérisé en ce que** les organes de transport (23) du convoyeur de remise (2) sont des chaînes, des courroies ou des courroies dentées.

14. Dispositif selon la revendication 13, **caractérisé en ce que** les appuis (3) sont des cames.

15. Dispositif selon la revendication 13, **caractérisé en ce que** le convoyeur de remise (2) présente comme organes de transport (23) des chaînes et **en ce que** des griffes sont prévues sur les chaînes comme appui (3).

16. Dispositif selon l'une quelconque des revendications précédentes, **caractérisé en ce que** le dispositif d'amenée (1) et les appuis (3) sont entraînés par un moteur commun (26).

17. Dispositif selon l'une quelconque des revendications précédentes, **caractérisé en ce qu'**un coulisseau (6) mobile alternativement, parallèlement au brin supérieur du dispositif d'évacuation (10) est prévu entre le dispositif d'amenée (1) et le dispositif d'évacuation (10).

18. Dispositif selon les revendications 10 et 17, **caractérisé en ce que** le coulisseau (6) est réalisé comme un peigne et a des dents qui s'engagent dans les espaces intermédiaires entre les organes de transport (23) du convoyeur de remise (2).

19. Dispositif selon la revendication 17 ou 18, **caractérisé en ce que** le coulisseau (6) est entraîné à l'aide d'une manivelle (29).

20. Dispositif selon l'une quelconque des revendications 17 à 19, **caractérisé en ce que** le coulisseau (6) peut être entraîné de manière synchrone avec les appuis (3).

21. Dispositif selon la revendication 20, **caractérisé en ce que** le coulisseau (6) et les appuis (3) sont entraînés par le même moteur (26).

22. Dispositif selon l'une quelconque des revendications précédentes en liaison avec la revendication 13, **caractérisé en ce que** l'entraînement pour le déplacement du dispositif d'évacuation (10) s'effectuant dans le sens de transport du dispositif d'amenée (1) est synchronisé avec l'entraînement des appuis (3).

23. Dispositif selon l'une quelconque des revendications précédentes, **caractérisé en ce que** le dispositif d'évacuation (10) peut être déplacé dans le sens de transport du dispositif d'amenée (1).

24. Dispositif selon la revendication 23, **caractérisé en ce que** le dispositif d'évacuation (10) peut être déplacé transversalement pendant le processus de paquetage uniformément et en continu.

25. Dispositif selon la revendication 23 ou 24, **caractérisé en ce que** le dispositif d'évacuation (10) peut être déplacé transversalement alternativement approximativement de sa largeur.

26. Dispositif selon l'une quelconque des revendications précédentes, **caractérisé en ce qu'**un contre-support (11) tourné vers le dispositif d'amenée (1) est prévu sur le dispositif d'évacuation (10).

27. Dispositif selon la revendication 26, **caractérisé en ce que** le contre-support (11) est amorti.

28. Dispositif selon la revendication 27, **caractérisé en ce que** le contre-support (11) est amorti pneumatiquement, de préférence par un ou plusieurs vérins à faible course (12).

29. Dispositif selon l'une quelconque des revendications précédentes, **caractérisé en ce qu'**à l'opposé du dispositif de remise (2) est prévu sur le dispositif d'évacuation (10) un dispositif de guidage (17) s'étendant de haut en bas, qui doit éviter un renversement des pièces de bois parallélépipédiques (18) sur le dispositif d'évacuation (10).

30. Dispositif selon la revendication 29, **caractérisé en ce que** le dispositif de guidage (17) est réglable en hauteur.

31. Dispositif selon la revendication 29 ou 30, **caractérisé en ce qu'**au dispositif de guidage (17) est associé un cliquet (53) qui peut être pivoté autour d'un axe (54) horizontal.

32. Dispositif selon la revendication 31, **caractérisé en ce que** le cliquet (53) peut être pivoté de moins de 90° et est articulé à un levier (55) qui de son côté peut être pivoté autour d'un axe (54) parallèle à l'axe (54) du cliquet (53).

33. Dispositif selon la revendication 32, **caractérisé en ce que** l'axe (54) du levier (55) est logé de manière réglable en hauteur.

34. Dispositif selon la revendication 33, **caractérisé en ce que** l'axe (54) du levier (55) est réglable en hauteur conjointement avec le dispositif de guidage (17).

35. Utilisation d'un dispositif selon l'une quelconque des revendications précédentes, pour le paquetage de pièces de bois parallélépipédiques (18) qui sont amenées par le dispositif d'évacuation (10) à une installation d'assemblage à dents collées.
